# EUROPEAN PATENT SPECIFICATION

(11) **EP 3 590 027 B1**
(45) Date of publication and mention of the grant of the patent: **28.12.2022**
(21) Application number: 18746800.4
(22) Date of filing: 05.07.2018
(51) Int. Cl.: G06F 3/01, H04N 13/383, G02B 27/01, G02B 27/00, G02B 3/08

(54) **MULTI-PERSPECTIVE EYE-TRACKING FOR VR/AR SYSTEMS**
MULTIPERSPEKTIVISCHE AUGENVERFOLGUNG FÜR VR/AR-SYSTEME
OCULOMÉTRIE MULTI-PERSPECTIVE POUR SYSTÈMES RV/RA

(30) Priority: 31.10.2017 US 201762579203 P; 05.12.2017 US 201715832275
(43) Date of publication of application: 08.01.2020
(73) Proprietor: Google LLC, Mountain View, CA 94043 (US)
(72) Inventor: PERREAULT, John D., Mountain View, California 94043 (US)
(74) Representative: Maikowski & Ninnemann Patentanwälte Partnerschaft mbB
(86) International application number: PCT/US2018/040896
(87) International publication number: WO 2019/089094

(56) References cited:
- WO-A1-2015/162098
- WO-A1-2016/046514
- US-A- 4 145 122
- US-A1- 2017 108 697

## Description

### BACKGROUND

### Field of the Disclosure

The present disclosure relates generally to virtual reality/augmented reality (VR/AR) systems and, more particularly, to eye-tracking for VR/AR systems.

### Description of the Related Art

Some computer display systems, such as some head-mounted display (HMD) systems, employ eye-tracking techniques to enhance the user experience. For example, some display systems employ an eye-tracking system that applies machine vision techniques to a captured image of a user's eye to identify a pose of the eye. Based on the identified pose, the display system can modify content displayed to the user, can identify that the user has selected a displayed icon or other displayed item, and the like. However, the user's eye is often occluded by surrounding facial features (e.g., an eyelash) or other objects in the user's environment, or by glints of light on the eye itself. These occlusions can interfere with the eye-tracking system's ability to identify the pose of the eye, and therefore negatively impact the user's experience. Moreover, the occlusions are often dynamic in nature, and are therefore difficult to account for by conventional eye-tracking systems.

For example, WO 2016/046514 A1 relates to an object tracking device using waveguide display using electrically switchable gratings. US 2017/108697 A1 relates to a dual-mode augmented/virtual reality near-eye wearable display. WO 2015/162098 A1 discloses methods and apparatuses for controlling the displayed images for use in visual field testing.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of a display system that identifies a pose of a user's eye based on multiple perspectives of the eye captured via a segmented optics array in accordance with some embodiments.
FIG. 2 is a diagram illustrating the display system of FIG. 1 employing a lenslet array as the segmented optics array in accordance with some embodiments.
FIG. 3 is a diagram illustrating the display system of FIG. 1 employing a Fresnel lens as the segmented optics array in accordance with some embodiments.
FIG. 4 is a block diagram of an eye-tracking module of the display system of FIG. 1 employing a neural net to select an eye perspective in accordance with some embodiments.
FIG. 5 is a flow diagram of a method of identifying a pose of a user's eye based on multiple perspectives of the eye captured via a segmented optics array in accordance with some embodiments.

### DETAILED DESCRIPTION

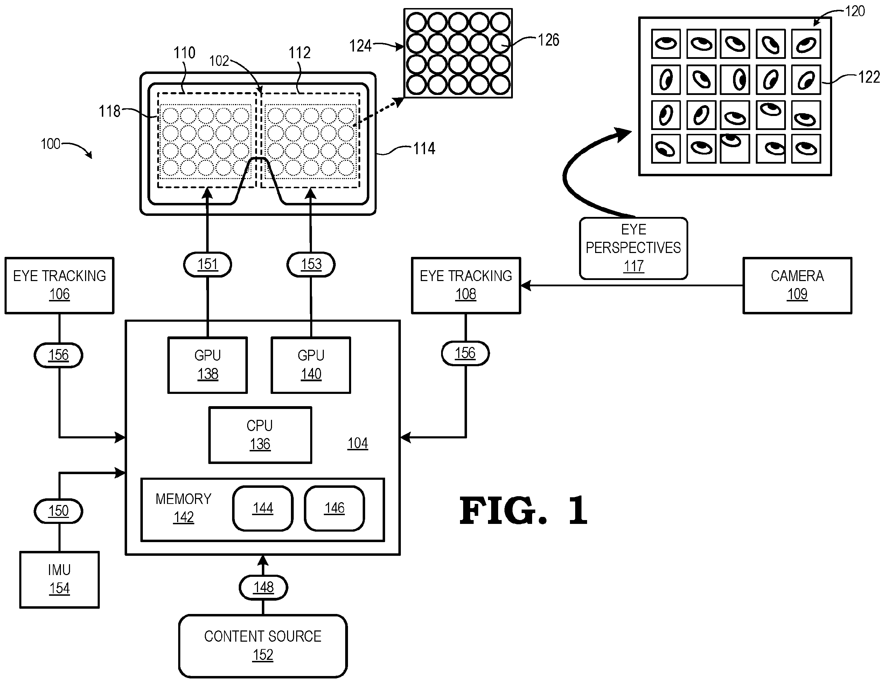

FIGs. 1-5 illustrate techniques for tracking a pose of a user's eye based on multiple perspectives of the eye captured via a segmented optics array, such as a lenslet array or Fresnel lens. A display system reflects light (e.g., infra-red light) off each segment of the segmented optics array, and captures an image based on the reflected light. Because of the segmented optics, the captured image represents multiple concurrent perspectives of the user's eye. The display system analyzes the different perspectives and selects a perspective, or combination of perspectives, and based on the selected perspective or combination, identifies a pose of the user's eye. By employing multiple perspectives of the eye, the display system reduces the impact of occlusions on eye tracking, thereby improving the user experience.

To illustrate, conventional eye-tracking systems identify the position of the eye at a given instant in time based on a single image of the eye, taken from a single perspective, at or near the given instant in time. However, the eye, or a particular portion of the eye such as the pupil, may be occluded in the image by an eyelash, by a particularly bright reflection of light, or by other features. These occlusions can make it difficult or impossible to identify the pose of the eye. Using the techniques and systems described herein, an eye-tracking system employs the segmented optics array to capture an image having multiple concurrent, and different, perspectives of the eye, so that at least one of the perspectives is likely to depict the eye without occlusions. For example, an eyelash may occlude the eye in one of the perspectives, but a different perspective, depicting the eye from a different angle, is un-occluded by the eyelash. The eye-tracking system can analyze each of the different perspectives to identify the perspective, or combination of perspectives, that is predicted to result in the most accurate identification of the eye's pose, and employs the selected perspective (or combination of perspectives) to identify the pose of the eye.

FIG. 1 illustrates a head mounted display (HMD) system 100 incorporating multi-perspective eye-tracking in accordance with at least one embodiment. In the depicted example, the HMD system 100 includes a computational display sub-system 102, a rendering component 104, and one or more eye-tracking modules, such as one or both of an eye-tracking module 106 for tracking a user's left eye and an eye-tracking module 108 for tracking the user's right eye. The computational display sub-system 102 includes a left-eye display 110 and a right-eye display 112 mounted in an apparatus 114 (e.g., goggles, glasses, etc.) that places the displays 110, 112 in front of the left and right eyes, respectively, of the user.

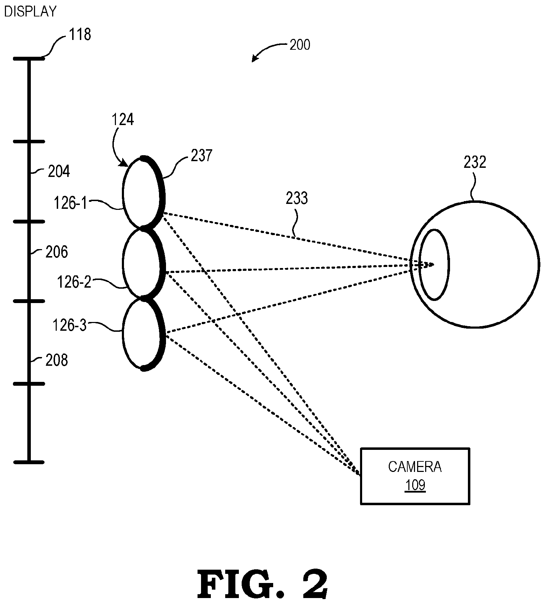

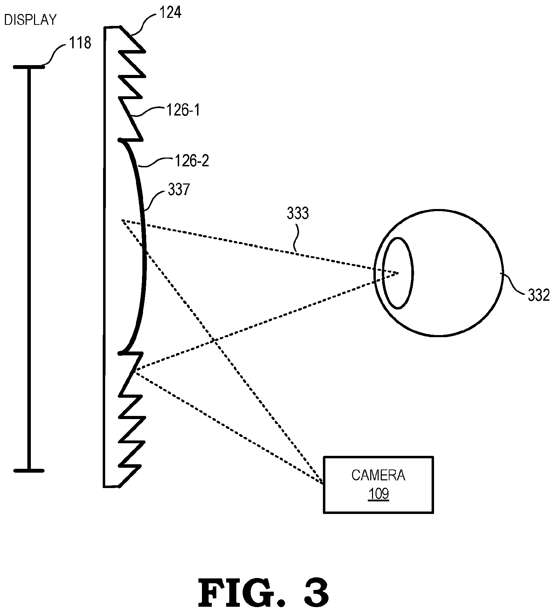

As shown by view 116, each of the displays 110, 112 includes at least one display panel 118 to display a sequence or succession of integral lightfield frames (hereinafter, "lightfield frame" for ease of reference), each of which comprises an array 120 of elemental images 122. For ease of reference, an array 120 of elemental images 122 may also be referred to herein as a lightfield frame 120. Each of the displays 110, 112 further includes a segmented optics array 124 of optical segments 126 overlying the display panel 118. As used herein, a segmented optics array refers to an optical array that includes a plurality of optical segments, wherein each optical segment modifies (e.g. reflects) received light, and wherein the light received by each optical segment is different than the light received by the other optical segments of the array. The segmented optics array can thereby provide light to generate an image (e.g., image 120) including a plurality of segments, referred to herein as sub-images (e.g., sub-image 122), wherein each sub-image reflects a different perspective of an environment or object (e.g., one of the user's eyes). In particular, each sub-image corresponds to an image generated from the light modified by a different one of the optical segments. Further, the sub-images display concurrent, substantially simultaneous perspectives of the environment or object. Examples of segmented optics arrays, as described further herein with respect to FIGs. 2 and 3, include an array of lenslets and a Fresnel lens having a plurality of sections.

Typically, the number of optical segments 126 in the segmented optics array 124 is equal to the number of elemental images 122 in the array 120, but in other implementations the number of optical segments 126 may be fewer or greater than the number of elemental images 122. Note that while the example of FIG. 1 illustrates a 5x4 array of elemental images 122 and a corresponding 5x4 array 120 of optical segments 126 for ease of illustration, in a typical implementation the number of elemental images 122 in a lightfield frame 120 and the number of optical segments 126 in the segmented optics array 124 typically is much higher. Further, in some embodiments, a separate display panel 118 is implemented for each of the displays 110, 112, whereas in other embodiments the left-eye display 110 and the right-eye display 112 share a single display panel 118, with the left half of the display panel 118 used for the left-eye display 110 and the right half of the display panel 118 used for the right-eye display 112.

In at least one embodiment, the segmented optics array 124 overlies the display surface 130 of the display panel 118 so as to be disposed between the display surface 130 and the corresponding eye of the user. In this configuration, each optical segment 126 focuses a corresponding region of the display surface 130 onto the pupil of the eye, with each such region at least partially overlapping with one or more adjacent regions. Thus, in such computational display configurations, when an array of elemental images is displayed at the display surface 130 of the display panel 118 and then viewed by the eye through the segmented optics array 124, the user perceives the array of elemental images as a single image of a scene. Thus, when this process is performed in parallel for both the left eye and right eye of the user with the proper parallax implemented therebetween, the result is the presentation of autostereoscopic three-dimensional (3D) imagery to the user.

As also shown in FIG. 1, the rendering component 104 includes a set of one or more processors, such as the illustrated central processing unit (CPU) 136 and graphics processing units (GPUs) 138, 140 and one or more storage components, such as system memory 142, to store software programs or other executable instructions that are accessed and executed by the processors 136, 138, 140 so as to manipulate the one or more of the processors 136, 138, 140 to perform various tasks as described herein. Such software programs include, for example, rendering program 144 comprising executable instructions for an accommodation range adjustment process, as described below, as well as an eye-tracking program 146 comprising executable instructions for an eye-tracking process, as also described below.

In operation, the rendering component 104 receives rendering information 148 from a local or remote content source 150, where the rendering information 148 represents graphics data, video data, or other data representative of an object or scene that is the subject of imagery to be rendered and displayed at the display sub-system 102. Executing the rendering program 144, the CPU 136 uses the rendering information 148 to send drawing instructions to the GPUs 138, 140, which in turn utilize the drawing instructions to render, in parallel, a series of lightfield frames 151 for display at the left-eye display 110 and a series of lightfield frames 153 for display at the right-eye display 112 using any of a variety of well-known VR/AR computational/lightfield rendering processes. As part of this rendering process, the CPU 136 may receive pose information 150 from an inertial management unit (IMU) 154, whereby the pose information 150 is representative of a current pose of the display sub-system 102 and control the rendering of one or more pairs of lightfield frames 151, 153 to reflect the viewpoint of the object or scene from the current pose.

The rendering component 104 further may use eye pose information from one or both of the eye-tracking modules 106, 108 to change the elemental images 122 to be displayed. To this end, the eye-tracking modules 106, 108 each may include one or more infrared (IR) light sources (referred to herein as "IR illuminators") to illuminate the corresponding eye with IR light, one or more imaging cameras (e.g., camera 109) to capture the IR light reflected off the segmented optics array 124 as a corresponding eye image 120.

As explained above, the eye image 120 includes a plurality of sub-images (e.g., sub-image 122), wherein each sub-image displays a different perspective of the eye. Thus, for example, one sub-image may correspond to a perspective of the eye from below the eye, another sub-image may correspond to a perspective of the eye from below and to the left of the eye, still another perspective may correspond to a perspective of the eye from above and to the right of the eye, and the like. The camera 109 provides the different perspectives of the eye to the eye-tracking module 108 as a set of eye perspectives 117. According to the invention, the eye perspectives 117 are provided as the single image 120. In other embodiments, the camera 109 may divide the different sub-images of the image 120 into one or more subsets, and provide the subsets of sub-images as the eye perspectives 117.

Based on the eye perspectives 117, the eye-tracking module 108 determines a pose (one or both of a position and orientation) of the corresponding eye. According to the invention, the eye-tracking module 108 selects one of the perspectives of the eye perspectives 117 likely to produce the most reliable or accurate pose, and identifies, according to conventional eye tracking techniques, the pose of the eye based on the sub-image corresponding to the selected perspective. For example, the eye-tracking module 108 can employ machine vision techniques to identify one or more edges of the eye, or portions of the eye such as the pupil, and identify a pose of the eye based on the eye edges or eye portions.

To select the eye perspective for pose identification, the eye-tracking module 108 can apply machine vision techniques to each sub-image (or a selected subset of the sub-images) and generate a confidence score for each sub-image based, for example, on the number of "eye-like" features identified in the corresponding sub-image. The eye-tracking module 108 then selects the sub-image having the highest confidence score to identify the pose of the corresponding eye.

It will be appreciated that at different times different perspectives of the eye may be the best perspective from which to identify the pose of the eye. Thus, for example, at a given point in time a perspective from above and to the left of the eye may be the best perspective from which to identify the eye's pose, while at a later point in time the eye may be occluded from that perspective (e.g., an eyelash may be partially occluding the pupil of the eye). Accordingly, at the later point in time a different perspective, such as a perspective from above and to the right of the eye may be the best perspective from which to identify the eye's pose. Thus, at different times the perspective having the best confidence score will change, and therefore the eye-tracking module 108 will select different perspectives of the eye.

In other embodiments, the eye-tracking module 108 employs a neural network (also referred to herein as a "neural net") that has been trained to identify an eye pose from the sub-images supplied by the eye perspectives 117. The neural net is initially trained based on training data having a plurality of images of an eye, wherein different images correspond to different poses of the eye. During training, the neural net is given feedback according to whether it correctly identifies an eye pose from an image or combination of images, and the neural net adjusts its pathways according to the feedback, thus training the neural net to more accurately identify eye poses from images. After training, the eye-tracking module 108 employs the neural network to analyze the eye perspectives 117 to identify the eye pose. In some embodiments, the neural net uses a plurality of eye perspectives to identify the eye pose. For example, the neural net may identify a composite of different perspectives of the eye from the eye perspectives 117, and identify the eye pose based on the composite of perspectives.

In at least one embodiment, the eye-tracking module 106 identifies an eye pose of the corresponding eye in similar fashion to the eye-tracking module 108, based on an image including multiple sub-images corresponding to different eye perspectives of the eye. The eye-tracking modules 106 and 108 indicate the respective eye poses to the rendering component 104 via information 156. Based on the eye poses, the CPU 136 can modify the images displayed to user via the display sub-system 102. For example, based on the eye pose, the CPU 136 can determine that the user is intending to look at a particular portion of a virtual reality environment, and, in conjunction with the GPUs 138 and 140, generate images corresponding to the portion of the virtual reality environment. The rendering component 104 provides the generated images to the display sub-system for display as explained above.

It will be appreciated that, as explained above, the segmented optics array 124 is employed both to display images to the user, and to reflect light to identify multiple concurrent perspectives of the eye for eye tracking. The HMD SYSTEM 100 is thus able to more accurately and reliably identify eye poses without employing substantial additional hardware to determine the multiple concurrent perspectives. Accordingly, the eye-tracking of the HMD SYSTEM 100 is improved while maintaining relatively low power and other resource consumption and maintaining a relatively comfortable form factor.

FIG. 2 is a diagram illustrating the display system of FIG. 1 employing a lenslet array as the segmented optics array 124 in accordance with some embodiments. In the depicted example, the segmented optics array includes a plurality of lenslets (e.g., lenslets 126-1, 126-2, and 126-3), also sometimes referred to as microlenses. Each of the lenslets 126 is coated on its eye-facing side with an infra-red (IR) reflective coating 237. Thus, each of the lenslets 126 passes visible light (that is, light in the visible spectrum) to the display panel 118 and reflects IR light (that is, light in the infra-red spectrum).

In the illustrated example, each of the lenslets 126 of the lenslet array 124 serves as a separate "projector" of visible light onto an eye 132, with each "projector" overlapping with one or more adjacent projectors in forming a composite virtual image from the array of elemental images displayed at the display panel 118. To illustrate, the lenslet 126-1 projects a corresponding elemental image (represented by region 204) from one region of the virtual image, the lenslet 126-2 projects a corresponding elemental image (represented by region 206) from a different region of the virtual image, and the lenslet 126-3 projects a corresponding elemental image (represented by region 208) from still another region 214 of the virtual image.

Each of the lenslets 126 also reflects rays (e.g. ray 233) of IR light that have, in turn, been reflected off the eye 232. In some embodiments, the IR light reflected off the eye 232, and in turn reflected off the lenslets 126, is ambient IR light in the environment of the HMD SYSTEM 100. In other embodiments, the HMD SYSTEM 100 includes an IR illuminator (not shown) that continuously or periodically illuminates the eye 232 with IR light, and the light reflected off the eye 232 and in turn reflected off the lenslets 126, is at least in part light generated by the IR illuminator.

The camera 109 is an IR camera that captures images based on the IR light reflected from the lenslets 126. It will be appreciated that the light reflected from each lenslet provides an image of the eye 232 from a different perspective. Thus, for example, the light reflected from the lenslet 126-1 provides an image of the eye from a given perspective, and the light reflected from the lenslet 126-2 provides a concurrent image of the eye from a different perspective than the lenslet 126-1. Accordingly, an image captured by the camera 109 will be composed of a set of sub-images, with each sub-image corresponding to a different one of the lenslets 126, and each sub-image displaying the perspective of the eye provided by the IR light reflected from the corresponding lenslet. The HMD SYSTEM 100 employs the sub-images for eye-tracking as described above with respect to FIG. 1.

FIG. 3 is a diagram illustrating the display system of FIG. 1 employing a Fresnel lens as the segmented optics array 124 in accordance with some embodiments. As will be appreciated by one skilled in the art, the Fresnel lens 124 is a lens formed into a plurality of sections (e.g., sections 126-1, 126-2). Each of the sections is curved on an eye-facing side (that is, a side of the section facing an eye 332), and the curves of the sections are aligned such that the refractive properties of the lens (for visible light passing through the lens) are substantially similar to or the same as a larger plano-convex lens with similar focusing power. The Fresnel lens 124 therefore can provide focusing power for an image displayed at the display panel 118 as a larger convex lens, but at substantially less weight and size.

The Fresnel lens 124 is coated on its eye-facing side with an infra-red (IR) reflective coating 337. Thus, each of the sections 126 passes visible light (that is, light in the visible spectrum) from the display panel 118 and reflects IR light (that is, light in the infra-red spectrum). In particular, each of the sections 126 also reflects rays (e.g. ray 333) of IR light that have, in turn, been reflected off the eye 332. As with the example of FIG. 2, the IR light may be ambient light, or may at least in part be ambient light generated by an IR illuminator (not shown).

The camera 109 is an IR camera that captures images based on the IR light reflected from the sections 126. As with the lenslets of FIG. 2, the light reflected from each section of the Fresnel lens provides an image of the eye 332 from a different perspective. Thus, for example, the light reflected from the section 126-1 provides an image of the eye from a given perspective, and the light reflected from the section 126-2 provides a concurrent image of the eye from a different perspective than the section 126-1. Accordingly, an image captured by the camera 109 will be composed of a set of sub-images, with each sub-image corresponding to a different one of the sections 126, and each sub-image displaying the perspective of the eye provided by the IR light reflected from the corresponding section. The HMD SYSTEM 100 employs the sub-images for eye-tracking as described above with respect to FIG. 1.

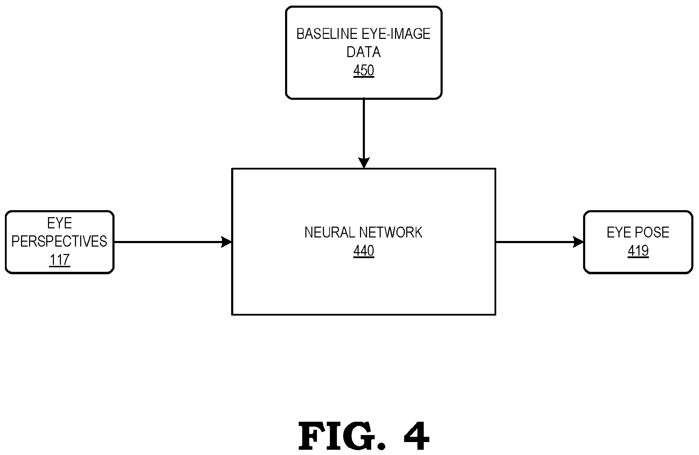

FIG. 4 is a block diagram of the eye-tracking module 108 of FIG. 1 employing a neural net to select an eye perspective in accordance with some embodiments. In the illustrated example, the eye-tracking module 108 includes an artificial neural network 440. As will be appreciated by one skilled in the art, the neural network 440 includes a plurality of nodes connected via an interconnect, such that each node is connected to at least one, and many cases more than one, other node. Each of the connections between nodes can be assigned a strength value. Further, data can be transmitted between nodes based on one or more propagation rules associated with the neural network 440. The states of each node, the strength values of the connections between nodes, and other parameters of the neural network 440 are governed by one or more learning rules. For the embodiment of FIG. 4, the learning rules for the neural network 440 are specified to configure, or "train", the neural network 440 to identify an eye pose based on images representing multiple concurrent perspectives of the eye.

To illustrate, the neural network 440 is initially configured with a baseline set of connections, connection strengths, propagation rules, and learning rules. Baseline eye-image data 450 is supplied to the neural network 440, wherein the baseline eye-image data is a set of known images (e.g., images captured in a test environment), with a corresponding eye pose defined for each image. Based on the baseline eye-image data 450, the neural network 440 generates a set of corresponding test eye poses. The test eye poses are compared to the eye poses defined for each image and, based on the differences, feedback is supplied to the neural network 440 to adjust one or more of the network parameters, such as the set of connections, connection strengths, propagation rules, learning rules, and the like. The baseline eye-image data 450 is again provided as inputs to the neural network 440 to generate another set of test eye poses, the test eye poses are compared to the defined eye poses, and feedback is again supplied to the neural network 440 to again adjust the network parameters. This process is repeated iteratively until the test eye poses match the defined eye poses within a threshold correlation.

After the neural network 440 has been trained based on the baseline eye-image data 450, the eye-tracking module 108 employs the neural network 440 to identify an eye pose of a user's eye. In particular, the eye-tracking module 108 provides as input to the neural network 440 the eye perspectives 117, representing multiple concurrent perspectives of the user's eye as described above with respect to FIG. 1. Based on the eye perspectives 117, and based on the network parameters established during training, the neural network 440 generates an eye pose 419. By employing the neural network 440, the eye-tracking module 108 can efficiently identify an eye pose from a wide variety of eye perspectives and image types. For example, in some embodiments the neural network 440 can identify the eye pose based on a combination of perspectives of the eye, rather than selecting a single perspective. Further, in some embodiments the neural network 440 can identify the eye pose from images that appear distorted or are otherwise difficult to process with conventional machine vision techniques.

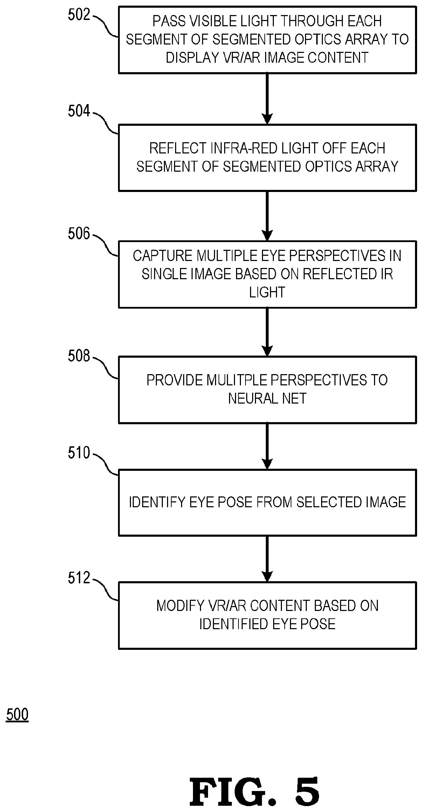

FIG. 5 is a flow diagram of a method 500 of identifying a pose of a user's eye based on multiple perspectives of the eye captured via a segmented optics array in accordance with some embodiments. The method 500 is described with respect to an example embodiment at the HMD system 100. At block 502, visible light is passed through the segmented optics array 124, thereby displaying VR/AR content to the user. At block 504, IR light is reflected off each segment of the segmented optics array 124. In some embodiments, the IR light is generated by an IR illuminator of the HMD system 100.

At block 506 the camera 109 captures the image 120 based on the reflected IR light. The captured image 120 includes a plurality of sub-images, each sub-image depicting a different perspective of the user's eye. At block 508 the camera 109 provides the eye perspectives 117 based on the image 120 to the neural network 440 (FIG. 4). At block 510 the neural network 440 identifies the eye pose 419 based on the eye perspectives 117. At block 512 the eye-tracking module 108 provides the eye pose 419 to the rendering component 104, which modifies the VR/AR content based on the eye pose. The rendering component 104 then displays the modified VR/AR content to the user via the segmented optics array.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:
capturing, at an image capturing device (109), a plurality of concurrent perspectives (117) of an eye (232) based on light reflected from a segmented optics array (124), wherein capturing the plurality of concurrent perspectives comprises capturing the plurality of concurrent perspectives in a single image (120) at the image capturing device (109), and wherein the image (120) includes a plurality of sub-images (122), wherein each sub-image (122) displays a different perspective of the eye; and
generating, at an eye-tracking module (108), a confidence score for each sub-image (122), and identifying a position (419) of the eye based on the plurality of concurrent perspectives by selecting the sub-image (122) having the highest confidence score.

2. The method of claim 1, wherein the segmented optics array (124) comprises an array of lenslets (126).

3. The method of claim 2, wherein each of the plurality of concurrent perspectives corresponds to a different lenslet (126-1, 126-2, 126-3) of the array of lenslets (126).

4. The method of claim 1, wherein the segmented optics array (124) comprises a Fresnel lens.

5. The method of any preceding claim, wherein capturing the plurality of concurrent perspectives comprises:
reflecting non-visible light (233) off the segmented optics array (124), the segmented optics array (124) configured to pass through visible light; and
identifying the position of the eye based on the reflected non-visible light (233).

6. The method of any preceding claim, further comprising:
generating an image for display (151, 153) based on the position of the eye; and
displaying the image via the segmented optics array (124).

7. The method of any of claims 1 to 6 being performed at a head-mounted display, HMD, system comprising the segmented optics array (124), whereby the single image (120) captured by the image capturing device (109) forms a second image (120), further comprising:
displaying a first image (151,153) via the segmented optics array (124) of the HMD.

8. The method of claim 7, wherein identifying the position of the eye comprises:
providing the second image to a neural network (440), the neural network (440) trained based on a training set of captured eye images (450); and
identifying the position of the eye at the neural network (440).

9. The method of claim 7 or claim 8, further comprising:
generating a third image based on the identified position of the eye; and
displaying the third image at the HMD via the segmented optics array.

10. A head-mounted display, HMD, system, comprising:
a segmented optics array (124);
an image capturing device (109) configured to capture a plurality of concurrent perspectives (117) of an eye based on light (233) reflected from the segmented optics array (124), wherein the image capturing device (109) is configured to capture the plurality of concurrent perspectives in a single image (120), and wherein the image (120) includes a plurality of sub-images (122), wherein each sub-image (122) displays a different perspective of the eye; and
an eye-tracking module (108) configured to generate a confidence score for each sub-image (122), and to identify a position (419) of the eye based on the plurality of concurrent perspectives by selecting the sub-image (122) having the highest confidence score.

11. The HMD system of claim 10, wherein the segmented optics array (124) comprises an array of lenslets (126).

12. The HMD system of claim 11, wherein each of the plurality of concurrent perspectives corresponds to a different lenslet (126-1, 126-2, 126-3) of the array of lenslets (126).

13. The HMD system of claim 10, wherein the segmented optics array (124) comprises a Fresnel lens.

14. The HMD system of any of claims 10 to 13, wherein:
the segmented optics array (124) comprises a reflective coating (237) configured to reflect non-visible light and to pass through visible light; and
wherein the image capturing device (109) is configured to capture the plurality of perspectives based on the reflected non-visible light.

15. The HMD system of any of claims 10 to 14, further comprising:
a display (118) configured to display an image via the segmented optics array (124), the image based on the position of the eye.

## Patentansprüche

1. Verfahren, umfassend:
Erfassen, an einer Bildaufnahmevorrichtung (109), einer Vielzahl von gleichzeitigen Perspektiven (117) eines Auges (232) basierend auf Licht, das von einer segmentierten Optikanordnung (124) reflektiert wird, wobei das Erfassen der Vielzahl von gleichzeitigen Perspektiven ein Erfassen der Vielzahl von gleichzeitigen Perspektiven in einem einzelnen Bild (120) an der Bildaufnahmevorrichtung (109) umfasst, und wobei das Bild (120) eine Vielzahl von Teilbildern (122) beinhaltet; wobei jedes Teilbild (122) eine andere Perspektive des Auges anzeigt; und
Erzeugen, an einem Augenverfolgungsmodul (108), einer Konfidenzbewertung für jedes Teilbild (122), und Identifizieren einer Position (419) des Auges basierend auf der Vielzahl von gleichzeitigen Perspektiven durch Auswählen des Teilbildes (122), das die höchste Konfidenzbewertung aufweist.

2. Verfahren nach Anspruch 1, wobei die segmentierte Optikanordnung (124) eine Anordnung von Linsen (126) umfasst.

3. Verfahren nach Anspruch 2, wobei jede der Vielzahl von gleichzeitigen Perspektiven einer anderen Linse (126-1, 126-2, 126-3) der Anordnung von Linsen (126) entspricht.

4. Verfahren nach Anspruch 1, wobei die segmentierte Optikanordnung (124) eine Fresnel-Linse umfasst.

5. Verfahren nach einem der vorhergehenden Ansprüche, wobei das Erfassen der Vielzahl von gleichzeitigen Perspektiven Folgendes umfasst:
Reflektieren von nicht sichtbarem Licht (233) von der segmentierten Optikanordnung (124), wobei die segmentierte Optikanordnung (124) so konfiguriert ist, dass sie sichtbares Licht durchlässt; und
Identifizieren der Position des Auges basierend auf dem reflektierten nicht sichtbaren Licht (233).

6. Verfahren nach einem der vorhergehenden Ansprüche, ferner umfassend:
Erzeugen eines Bildes zur Anzeige (151, 153) basierend auf der Position des Auges; und
Anzeigen des Bildes über die segmentierte Optikanordnung (124) .

7. Verfahren nach einem der Ansprüche 1 bis 6, das an einem am Kopf befestigten Anzeigesystem (HMD), das die segmentierte Optikanordnung (124) umfasst, durchgeführt wird, wodurch das einzelne Bild (120), das von der Bildaufnahmevorrichtung (109) erfasst wird, ein zweites Bild (120) bildet, ferner umfassend:
Anzeigen eines ersten Bildes (151, 153) über die segmentierte Optikanordnung (124) des HMD.

8. Verfahren nach Anspruch 7, wobei das Identifizieren der Position des Auges Folgendes umfasst:
Bereitstellen des zweiten Bildes für ein neuronales Netzwerk (440), wobei das neuronale Netzwerk (440) basierend auf einem Trainingssatz von erfassten Augenbildern (450) trainiert wird; und
Identifizieren der Position des Auges in dem neuronalen Netzwerk (440).

9. Verfahren nach Anspruch 7 oder Anspruch 8, ferner umfassend:
Erzeugen eines dritten Bildes basierend auf der identifizierten Position des Auges; und
Anzeigen des dritten Bildes an dem HMD über die segmentierte Optikanordnung.

10. Am Kopf befestigtes Anzeigesystem (HMD), umfassend:
eine segmentierte Optikanordnung (124);
eine Bildaufnahmevorrichtung (109), die konfiguriert ist, eine Vielzahl von gleichzeitigen Perspektiven (117) eines Auges basierend auf Licht (233), das von der segmentierten Optikanordnung (124) reflektiert wird, zu erfassen, wobei die Bildaufnahmevorrichtung (109) konfiguriert ist, die Vielzahl von gleichzeitigen Perspektiven in einem einzelnen Bild (120) zu erfassen, und wobei das Bild (120) eine Vielzahl von Teilbildern (122) beinhaltet; wobei jedes Teilbild (122) eine andere Perspektive des Auges anzeigt; und
ein Augenverfolgungsmodul (108), das konfiguriert ist, eine Konfidenzbewertung für jedes Teilbild (122) zu erzeugen und eine Position (419) des Auges basierend auf der Vielzahl von gleichzeitigen Perspektiven durch Auswählen des Teilbilds (122), das die höchste Konfidenzbewertung aufweist, zu identifizieren.

11. HMD-System nach Anspruch 10, wobei die segmentierte Optikanordnung (124) eine Anordnung von Linsen (126) umfasst.

12. HMD-System nach Anspruch 11, wobei jede der Vielzahl von gleichzeitigen Perspektiven einer anderen Linse (126-1, 126-2, 126-3) der Anordnung von Linsen (126) entspricht.

13. HMD-System nach Anspruch 10, wobei die segmentierte Optikanordnung (124) eine Fresnel-Linse umfasst.

14. HMD-System nach einem der Ansprüche 10 bis 13, wobei:
die segmentierte Optikanordnung (124) eine reflektierende Beschichtung (237) umfasst, die so konfiguriert ist, dass sie nicht sichtbares Licht reflektiert und sichtbares Licht durchlässt; und
wobei die Bildaufnahmevorrichtung (109) konfiguriert ist, die Vielzahl von Perspektiven basierend auf dem reflektierten nicht sichtbaren Licht zu erfassen.

15. HMD-System nach einem der Ansprüche 10 bis 14, ferner umfassend:
eine Anzeige (118), die konfiguriert ist, ein Bild über die segmentierte Optikanordnung (124) anzuzeigen, wobei das Bild auf der Position des Auges basiert.

## Revendications

1. Procédé comprenant :
la capture, au niveau d'un dispositif de capture d'image (109), d'une pluralité de perspectives concomitantes (117) d'un œil (232) sur la base de la lumière réfléchie par un réseau optique segmenté (124), dans lequel la capture de la pluralité de perspectives concomitantes comprend la capture de la pluralité de perspectives concomitantes dans une seule image (120) au niveau du dispositif de capture d'image (109), et dans lequel l'image (120) comporte une pluralité de sous-images (122), dans lequel chaque sous-image (122) affiche une perspective différente de l'œil ; et
la génération, au niveau d'un module d'oculométrie (108), d'un score de confiance pour chaque sous-image (122), et l'identification d'une position (419) de l'œil sur la base de la pluralité de perspectives concomitantes par sélection de la sous-image (122) ayant le score de confiance le plus élevé.

2. Procédé selon la revendication 1, dans lequel le réseau optique segmenté (124) comprend un réseau de microlentilles (126).

3. Procédé selon la revendication 2, dans lequel chacune de la pluralité de perspectives concomitantes correspond à une microlentille différente (126-1, 126-2, 126-3) du réseau de microlentilles (126).

4. Procédé selon la revendication 1, dans lequel le réseau optique segmenté (124) comprend une lentille de Fresnel.

5. Procédé selon l'une quelconque des revendications précédentes, dans lequel la capture de la pluralité de perspectives concomitantes comprend :
la réflexion de lumière non visible (233) par le réseau optique segmenté (124), le réseau optique segmenté (124) étant configuré pour laisser passer de la lumière visible ; et
l'identification de la position de l'œil sur la base de la lumière non visible (233) réfléchie.

6. Procédé selon l'une quelconque des revendications précédentes, comprenant en outre :
la génération d'une image pour un affichage (151, 153) sur la base de la position de l'œil ; et
l'affichage de l'image par l'intermédiaire du réseau optique segmenté (124).

7. Procédé selon l'une quelconque des revendications 1 à 6, qui est réalisé au niveau d'un système d'affichage monté sur tête, HMD, comprenant le réseau optique segmenté (124), par lequel la seule image (120) capturée par le dispositif de capture d'image (109) forme une deuxième image (120), comprenant en outre :
l'affichage d'une première image (151, 153) par l'intermédiaire du réseau optique segmenté (124) du HMD.

8. Procédé selon la revendication 7, dans lequel l'identification de la position de l'œil comprend :
la fourniture de la deuxième image à un réseau neuronal (440), le réseau neuronal (440) étant entraîné sur la base d'un ensemble d'entraînement d'images oculaires capturées (450) ; et
l'identification de la position de l'œil au niveau du réseau neuronal (440).

9. Procédé selon la revendication 7 ou la revendication 8, comprenant en outre :
la génération d'une troisième image sur la base de la position identifiée de l'œil ; et
l'affichage de la troisième image au niveau du HMD par l'intermédiaire du réseau optique segmenté.

10. Système d'affichage monté sur tête, HMD, comprenant :
un réseau optique segmenté (124) ;
un dispositif de capture d'image (109) configuré pour capturer une pluralité de perspectives concomitantes (117) d'un œil sur la base de la lumière (233) réfléchie par un réseau optique segmenté (124), dans lequel le dispositif de capture d'image (109) est configuré pour capturer la pluralité de perspectives concomitantes dans une seule image (120), et dans lequel l'image (120) comporte une pluralité de sous-images (122), dans lequel chaque sous-image (122) affiche une perspective différente de l'œil ; et
un module d'oculométrie (108) configuré pour générer un score de confiance pour chaque sous-image (122), et pour identifier une position (419) de l'œil sur la base de la pluralité de perspectives concomitantes par sélection de la sous-image (122) ayant le score de confiance le plus élevé.

11. Système HMD selon la revendication 10, dans lequel le réseau optique segmenté (124) comprend un réseau de microlentilles (126).

12. Système HMD selon la revendication 11, dans lequel chacune de la pluralité de perspectives concomitantes correspond à une microlentille différente (126-1, 126-2, 126-3) du réseau de microlentilles (126).

13. Système HMD selon la revendication 10, dans lequel le réseau optique segmenté (124) comprend une lentille de Fresnel.

14. Système HMD selon l'une quelconque des revendications 10 à 13, dans lequel :
le réseau optique segmenté (124) comprend un revêtement réfléchissant (237) configuré pour réfléchir de la lumière non visible et laisser passer de la lumière visible ; et
dans lequel le dispositif de capture d'image (109) est configuré pour capturer la pluralité de perspectives sur la base de la lumière non visible réfléchie.

15. Système HMD selon l'une quelconque des revendications 10 à 14, comprenant en outre :
un afficheur (118) configuré pour afficher une image par l'intermédiaire du réseau optique segmenté (124), l'image étant basée sur la position de l'œil.
